# FASCICULE DE BREVET EUROPEEN

(11) **EP 1 215 078 B1**
(45) Date de publication et mention de la délivrance du brevet: **29.03.2006**
(21) Numéro de dépôt: 01124858.0
(22) Date de dépôt: 18.10.2001
(51) Int. Cl.: B60N 2/30

(54) **Strapontin intérieur pour véhicule automobile**
Innenklappsitz für ein Fahrzeug
Interior folding seat for a vehicle

(30) Priorité: 18.12.2000 FR 0016474
(43) Date de publication de la demande: 19.06.2002
(73) Titulaire: Peugeot Citroen Automobiles SA, 92200 Neuilly sur Seine (FR)
(72) Inventeur: Le Coquil, Serge, 91330 Yerres (FR)
(74) Mandataire: Poupon, Michel

(56) Documents cités:
- DE-C- 19 652 939
- GB-A- 878 015
- PATENT ABSTRACTS OF JAPAN vol. 006, no. 080 (M-129), 19 mai 1982 (1982-05-19) & JP 57 018522 A (MAZDA MOTOR CORP), 30 janvier 1982 (1982-01-30)

## Description

La présente invention concerne un strapontin intérieur pour véhicule automobile.

Elle se rapporte plus particulièrement à l'agencement d'un strapontin à l'intérieur de l'habitacle d'un véhicule automobile destiné à permettre la transformation du véhicule d'une configuration sept places, composée de trois rangées de sièges à une configuration cinq places composée uniquement de deux rangées de sièges.

On comprend aisément que lorsque le véhicule est en configuration sept places, on a perdu la cinquième place afin de permettre l'accès aux places arrière de la troisième rangée de sièges. Il s'avère donc que lorsque les trois places arrière sont escamotées afin de gagner en volume de coffre, le véhicule se retrouve dans une configuration quatre places, à savoir deux à l'avant et deux à l'arrière. Ceci ressort des connaissances usuelles du demandeur en la matière.

Le but de l'invention est de proposer l'agencement d'un strapontin à l'intérieur du véhicule permettant de résoudre l'inconvénient précité en récupérant cette cinquième place lorsque la troisième rangée de sièges est escamotée.

A cet effet, la présente invention a pour objet un strapontin intérieur équipement en véhicule automobile comportant au moins une rangée de sièges arrière apte à être escamotée dans une position dite portefeuille correspondant à la position dans laquelle le dossier de ladite rangée est rabattu sur l'assise et l'ensemble est relevé jusqu'à ce que le dossier et l'assise soient situés dans un plan vertical, caractérisé en ce qu'il est agencé au dos du dossier de la rangée de sièges de telle manière qu'en position escamotée de ladite rangée, le strapontin soit apte à occuper une position d'utilisation,

le dit strapontin étant constitué d'une assise articulée autour d'un axe transversal et d'un dossier disposé au dos du dossier d'une des assises de ladite rangée ; ledit axe d'articulation est disposé sur le même axe que l'axe du moyen de verrouillage du dossier de ladite rangée sur la structure latérale du véhicule et constitue en outre également le moyen de verrouillage du strapontin en position d'utilisation sur la structure.

Selon une autre caractéristique avantageuse, le moyen de verrouillage est constitué d'une gâche apte à s'engager alternativement soit dans un pêne solidaire de la structure afin d'immobiliser le dossier de la rangée soit dans une gorge réalisée sur une patte de fixation solidaire de la structure de la caisse afin d'immobiliser le dossier du strapontin.

Selon encore une autre caractéristique, le strapontin comprend un moyen de verrouillage de l'assise en position d'utilisation constitué d'un crochet de verrouillage solidaire d'un levier articulé sur l'armature du strapontin autour d'un axe transversal apte à enserrer un pion solidaire de la structure de la caisse.

Un autre objet de la présente invention concerne un véhicule automobile pourvu de trois rangées de sièges caractérisé en ce qu'il comporte un strapontin conforme à l'une quelconque des caractéristiques décrites ci-dessus, agencé sur le dossier de la troisième rangée de telle manière qu'en position escamotée de cette rangée de sièges, le strapontin soit apte à occuper une position d'utilisation dans laquelle celui-ci est en alignement avec la deuxième rangée de sièges.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue latérale d'un véhicule automobile équipé de trois rangées de sièges et d'un agencement de strapontin selon la présente invention,
- les figures 2 et 3 sont des vues similaires à la figure 1, illustrant la transformation du véhicule sept places en cinq places, respectivement une position intermédiaire d'escamotage de la troisième rangée de sièges et une position d'utilisation dans laquelle le strapontin est déployé,
- les figures 4 et 5 sont des vues de dessus correspondant respectivement aux figures 1 et 2, et
- la figure 6 est une vue de détail à plus grande échelle de l'agencement du strapontin selon l'invention.

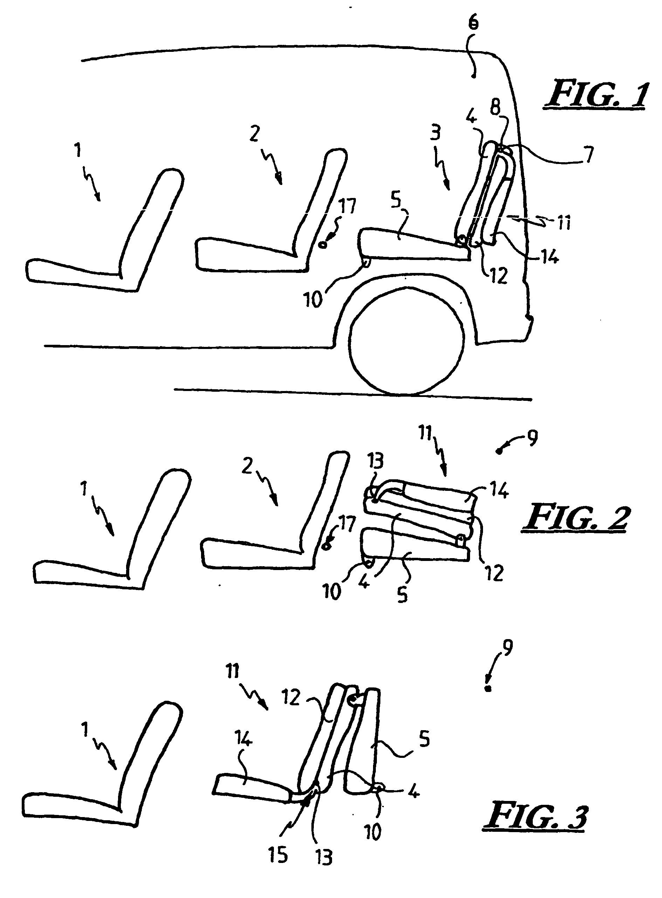

On a représenté sur les figures 1 à 5, l'habitacle d'un véhicule automobile équipé de trois rangées de sièges désignées par les références générales respectivement 1, 2 et 3 permettant ainsi le transport au maximum de sept personnes, à savoir deux à l'avant, deux au milieu sur la deuxième rangée de sièges et trois à l'arrière respectivement sur la troisième rangée de sièges.

Cette troisième rangée 3 de sièges est avantageusement apte à être escamotée derrière la deuxième rangée 2 de sièges dans une position dite « portefeuille » correspondant à la position dans laquelle le dossier 4 de la banquette de la troisième rangée est rabattu sur l'assise 5 et l'ensemble est relevé jusqu'à ce que le dossier 4 et l'assise 5 soient situés dans un plan vertical.

Cette banquette 3 est pourvue de manière symétrique par rapport à l'axe longitudinal du véhicule d'un moyen de verrouillage 7 du haut du dossier 4 avec la structure latérale 6 du véhicule destiné à immobiliser ladite banquette en position d'utilisation.

Ce moyen de verrouillage 7 est constitué classiquement d'une gâche 8 et d'un pêne 9 solidaire de la structure 6 de la caisse.

Le déverrouillage de ce moyen 7 permet de basculer le dossier 4 sur l'assise 5 puis de faire pivoter l'ensemble autour d'un axe transversal 10 par rapport à l'axe longitudinal du véhicule situé sous le nez de l'assise 5 de manière à ce que l'ensemble se retrouve dans un plan vertical.

On notera que l'assise 5 peut comporter des pieds supports arrière aptes à être verrouillés au plancher par des moyens connus en soi qui ne seront par conséquent pas décrits dans la suite de la description, nécessitant au préalable leur déverrouillage pour escamoter la banquette.

Selon la présente invention, le dossier 4 de cette troisième rangée 3 de sièges est avantageusement pourvu d'un strapontin 11 agencé de telle manière qu'en position escamotée de la troisième rangée de sièges, le strapontin soit apte à occuper une position d'utilisation dans laquelle celui-ci est en alignement avec la deuxième rangée de siège.

Pour ce faire, la banquette comporte au dos du dossier 4 d'une des assises de la troisième rangée un second dossier ou matelassure 12. Sur ce second dossier 12 est articulée, autour d'un axe transversal 13, une assise 14 constituant ainsi le strapontin 11. Cet axe d'articulation 13 est disposé avantageusement sur le même axe que l'axe de verrouillage 7 du dossier 4 de la banquette 3 sur la structure latérale 6 du véhicule et constitue en outre également le moyen de verrouillage 15 du strapontin 11 en position d'utilisation sur la structure.

Ce moyen de verrouillage 15 est constitué de la gâche 8 du moyen de verrouillage 7 du haut de dossier qui est apte à s'engager en position escamotée de la banquette dans une gorge 16 réalisée sur une patte de fixation 17 solidaire de la structure 6 de la caisse.

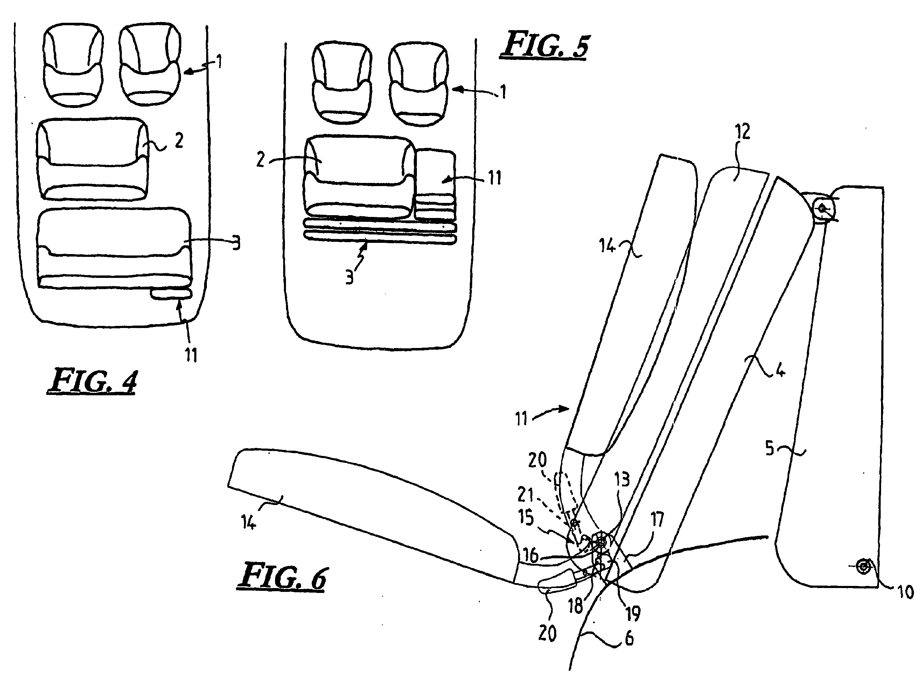

Sur cette patte de fixation 17 est également disposé un pion ou ergot 18 permettant le verrouillage de l'assise 14 du strapontin 11 en position d'utilisation par la coopération d'un crochet 19 de verrouillage solidaire d'un levier 20 articulé sur l'armature du strapontin autour d'un axe transversal 21. comme illustré à la figure 6.

La transformation du véhicule de sept en cinq piaces et le fonctionnement du mécanisme selon la présente invention qui découlent de manière évidente de la description ci-dessus, vont maintenant être explicités en relation avec l'ensemble des figures 1 à 6.

L'utilisateur désireux de transformer son véhicule déverrouille le dossier de la troisième rangée de sièges de la structure, puis fait pivoter ce dernier par rapport à l'axe d'articulation du dossier sur l'assise. L'utilisateur déverrouille éventuellement ensuite l'assise et bascule, par rapport à l'axe transversal, l'ensemble jusqu'à une position sensiblement verticale au voisinage du dossier de la deuxième rangée 2.

Dans cette dernière position, la gâche du dossier se positionne ainsi dans la gorge située sur la patte de fixation fixée à la structure de la caisse, par exemple sur l'avant des passages de roues arrière. Lorsque l'on fait pivoter l'assise du strapontin par rapport à l'axe de verrouillage du dossier en position escamotée afin d'obtenir la cinquième place, le crochet du levier situé sur le flan de l'assise du strapontin vient buter sur le pion 18 situé sur la patte de fixation 17 et se verrouiller automatiquement sur ce dernier, empêchant ainsi le retour de l'assise du strapontin. L'ensemble strapontin-banquette se retrouve solidaire de la structure 6 de la caisse.

Pour relever le strapontin, il suffit de faire pivoter le levier 20, qui remonte automatiquement par l'intermédiaire du ressort de torsion situé sur l'axe d'articulation de l'assise du strapontin, et d'effectuer les opérations inverses décrites ci-dessus.

On comprend à la lecture de la description ci-dessus que le strapontin selon la présente invention est relativement simple à réaliser et permet de transformer aisément le véhicule de cinq à sept places et inversement.

## Revendications

1. Strapontin intérieur équipant un vehicule automobile comportant au moins une rangée de sièges arrière apte à être escamotée dans une position dite portefeuille correspondant à la position dans laquelle le dossier (4) de ladite rangée est rabattu sur l'assise (5) et l'ensemble est relevé jusqu'à ce que le dossier (4) et l'assise (5) soient situés dans un plan vertical, **caractérisé en ce qu'**il est agencé au dos du dossier de la rangée de sièges de telle manière qu'en position escamotée de ladite rangée, le strapontin soit apte à occuper une position d'utilisation, ledit strapontin étant constitué d'une assise (14) articulée autour d'un axe transversal (13) et d'un dossier (12) disposé au dos du dossier (4) d'une des assises de ladite rangée ledit axe d'articulation (13) étant disposé sur le même axe que l'axe du moyen de verrouillage (7) du dossier (4) de ladite rangée sur la structure latérale (6) du véhicule et constituant en outre également le moyen de verrouillage (15) du strapontin (11) en position d'utilisation sur la structure.

2. Strapontin selon la revendication 1, **caractérisé en ce que** le moyen de verrouillage (15) est constitué d'une gâche (8) apte à s'engager alternativement soit dans un pêne solidaire de la structure afin d'immobiliser le dossier de la rangée soit dans une gorge (16) réalisée sur une patte de fixation (17) solidaire de la structure (6) de la caisse afin d'immobiliser le dossier du strapontin.

3. Strapontin selon l'une des revendications 1 à 2, **caractérisé en ce qu'**il comprend un moyen de verrouillage de l'assise en position d'utilisation constitué d'un crochet (19) de verrouillage solidaire d'un levier (20) articulé sur l'armature du strapontin autour d'un axe transversal apte à enserrer un pion solidaire de la structure de la caisse.

4. Véhicule automobile pourvu de trois rangées de sièges, **caractérisé en ce qu'**il comporte un strapontin conforme à l'une quelconque des revendications précédentes, agencé sur le dossier de la troisième rangée de telle manière qu'en position escamotée de cette rangée de sièges, le strapontin est apte à occuper une position d'utilisation dans laquelle ce dernier est en alignement avec la deuxième rangée de sièges.

## Patentansprüche

1. Innenklappsitz, der ein Kraftfahrzeug ausstattet, das mindestens eine Reihe von hinteren Sitzen aufweist, die in eine so genannte Portefeuillestellung eingezogen werden können, die der Stellung entspricht, in welcher die Rückenlehne (4) der genannten Reihe auf die Sitzfläche (5) hinuntergeklappt ist und die Einheit angehoben wird, bis die Rückenlehne (4) und die Sitzfläche (5) in einer senkrechten Ebene liegen, **dadurch gekennzeichnet, dass** er auf der Rückseite der Rückenlehne der Reihe von Sitzen so angeordnet ist, dass der Klappsitz bei der eingezogenen Stellung der genannten Sitzreihe eine Gebrauchsstellung einnehmen kann, wobei der Klappsitz aus einer Sitzfläche (14) besteht, die um eine Querachse (13) schwenkbar ist, und aus einer Rückenlehne (12), die auf der Rückseite der Rückenlehne (4) eines der Sitze der genannten Reihe angeordnet ist, wobei die genannte Schwenkachse (13) auf der gleichen Achse angeordnet ist wie die Achse des Verriegelungsmittels (7) zum Verriegeln der Rückenlehne (4) der genannten Reihe an dem Seitenaufbau (6) des Fahrzeugs und außerdem auch die Schwenkachse 13 das Verriegelungsmittel (15) des Klappsitzes (11) in Gebrauchsstellung auf der Struktur bildet.

2. Klappsitz nach Anspruch 1, **dadurch gekennzeichnet, dass** das Verriegelungsmittel (15) aus einer Raste (8) besteht, die sich alternativ entweder in einen Riegel einfügen kann, der fest mit der Struktur verbunden ist, um die Rückenlehne der Reihe zu fixieren, oder in eine Hohlkehle (16), die auf einer Befestigungspratze (17) hergestellt ist, die mit dem Fahrzeugaufbau (6) fest verbunden ist, um die Rückenlehne des Klappsitzes zu fixieren.

3. Klappsitz nach einem der Ansprüche 1 bis 2, **dadurch gekennzeichnet, dass** er ein Mittel zum Verriegeln der Sitzfläche in Gebrauchsstellung aufweist, das aus einem Verriegelungshaken (19) besteht, der fest mit einem Hebel (20) verbunden ist, der auf der Bewehrung des Klappsitzes um eine Querachse schwenkbar ist, und der einen Klotz, der fest mit dem Fahrzeugaufbau verbunden ist, einschließen kann.

4. Kraftfahrzeug versehen mit drei Reihen von Sitzen, **dadurch gekennzeichnet, dass** es einen Klappsitz gemäß einem der vorhergehenden Ansprüche aufweist, der auf der Rückenlehne der dritten Reihe so angeordnet ist, dass der Klappsitz in der eingezogenen Stellung dieser Reihe von Sitzen eine Gebrauchsstellung belegen kann, in welcher Letzterer mit der zweiten Reihe von Sitzen gefluchtet ist.

## Claims

1. Interior folding seat, which is fitted to an automotive vehicle and comprises at least one row of rear seats capable of being retracted into a so-called concertina position corresponding to the position in which the back (4) of said row is pulled-down onto the seat (5), and the assembly is raised until the back (4) and the seat (5) are situated in a vertical plane, **characterised in that** it is fitted on the rear of the back of the row of seats in such a manner that, in the retracted position of said row, the folding seat is capable of occupying a position of use, said folding seat being made up of a seat (14), hinged about a transverse spindle (13), and a back (12) disposed on the rear of the back (4) of one of the seats of said row, said hinge spindle (13) being disposed on the same axis as the axis of a locking means (7) of the back (4) of said row on the lateral structure (6) of the vehicle and also forming, in addition, the locking means (15) of the folding seat (11) in the position of use on the structure.

2. Folding seat according to claim 1, **characterised in that** the locking means (15) is made up of a catch (8) capable of engaging alternately either in a bolt, which is integral with the structure, in order to immobilise the back of the row, or in a groove (16), which is provided on a securing tab (17), which is integral with the structure (6) of the vehicle body, in order to immobilise the back of the folding seat.

3. Folding seat according to one of claims 1 to 2, **characterised in that** it comprises a means for locking the seat in the position of use, which means is made up of a locking hook (19) integral with a lever (20), which is articulated on the frame of the folding seat about a transverse spindle capable of engaging with a pin which is integral with the structure of the vehicle body.

4. Automotive vehicle provided with three rows of seats, **characterised in that** it includes a folding seat according to any of the preceding claims, fitted on the back of the third row in such a manner that, in the retracted position of this row of seats, the folding seat is capable of occupying a position of use in which said folding seat is in alignment with the second row of seats.
